# EUROPEAN PATENT SPECIFICATION

(11) **EP 1 077 172 B1**
(45) Date of publication and mention of the grant of the patent: **27.10.2004**
(21) Application number: 00117743.5
(22) Date of filing: 17.08.2000
(51) Int. Cl.: B62D 21/15, B62D 25/08

(54) **Vehicle body structure**
Kraftfahrzeugaufbau
Structure de carrosserie de véhicule automobile

(30) Priority: 19.08.1999 JP 23271999
(43) Date of publication of application: 21.02.2001
(73) Proprietor: Toyota Shatai Kabushiki Kaisya, Kariya-shi, Aichi-ken 448-8666 (JP)
(72) Inventor: Iwase, Wataru, c/o Toyota Shatai K.K., Kariya-shi, Aichi-ken 448-8666 (JP); Hayashizaki, Tsukasa, c/o Toyota Shatai K.K., Kariya-shi, Aichi-ken 448-8666 (JP); Oma, Kuniaki, c/o Toyota Shatai K.K., Kariya-shi, Aichi-ken 448-8666 (JP)
(74) Representative: Winter, Brandl, Fürniss, Hübner, Röss, Kaiser, Polte Partnerschaft

(56) References cited:
- EP-A- 0 390 752
- US-A- 5 110 177

## Description

### BACKGROUND OF THE INVENTION

### 1. Field of the invention

The present invention relates to a vehicle body structure, and in particular, improvement of the structure of a rear side member in a vehicle luggage space area.

### 2. Description of the Related Art

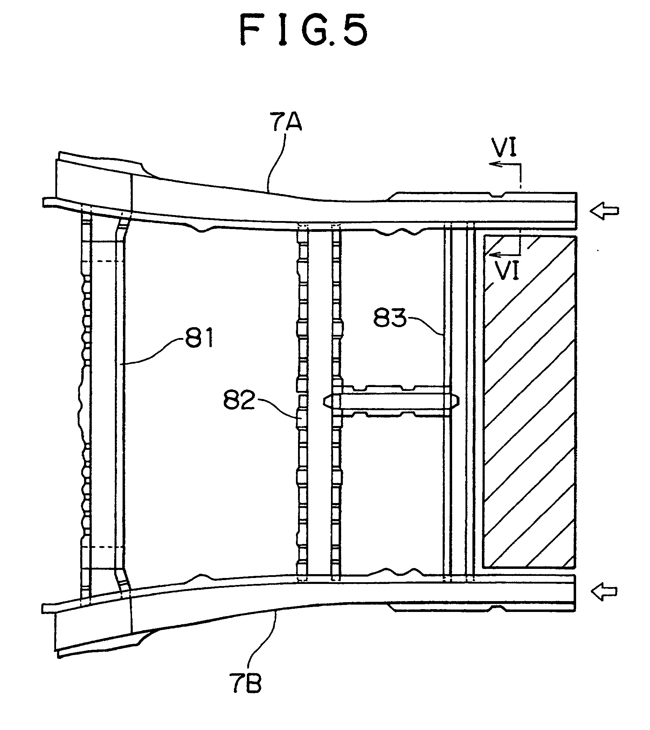

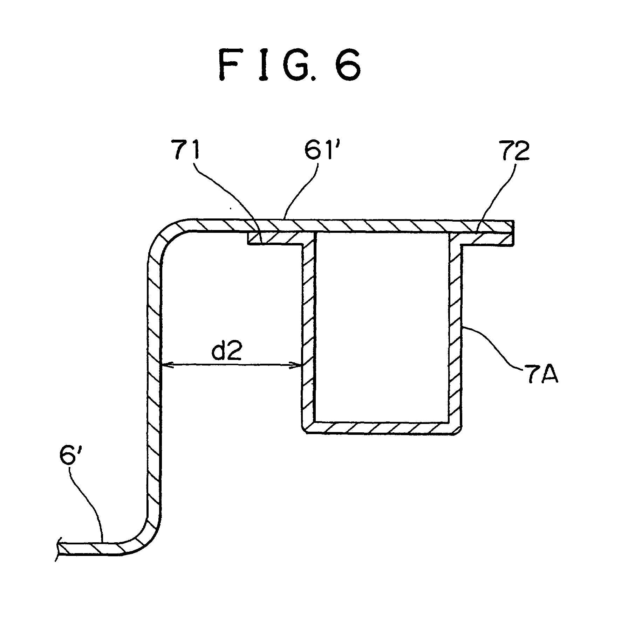

Fig. 5 is a plan view showing related-art rear side members. In Fig. 5, right and left rear side members 7A and 7B extending rearward from the front (left side in the figure) of both sides of a vehicle are almost straightly disposed while bending toward the inside so as not to contact the rear wheel on the way. The space between the rear ends of cross members 7A and 7B, the inside surfaces of which extend in the direction of the vehicle width at three front and rear points, forms a luggage space (the hatched area in Fig. 5). In this space, floor panel 6' (Fig. 6) is formed in a container shape, and the upper edge 61' thereof is joined to the open flanges 71 and 72 of the rear side members 7A and 7B which have a hat-shaped section opening upward.

In accordance with the increased size of baggage, in order to meet the demand for increasing the width of luggage space (the vertical direction of Fig. 5), the rear side members 7A and 7B may be bent toward the outside of the vehicle as much as possible in the luggage space area (for example, Japanese Utility Model No. 2594404 and document US-A-5 110 177). However, in this condition, in the case where a shock load is applied as shown by the arrow in Fig. 5, when the vehicle crashes, the bent portion breaks, and as a result, shock load absorption performance is deteriorated.

### SUMMARY OF THE INVENTION

The object of the invention is to provide a vehicle body structure which can effectively absorb an applied shock load in the event of a rear-end crash while securing a sufficient width of the luggage space.

In order to achieve the above object, according to one aspect of the invention, each of the right and left rear side members extending back and forth on a vehicle body comprises a front member having a hat-shaped section opening upward and a rear member which has a section of a roughly U-shape and is opened upward, and the opening of which is covered by a plate. In the middle portion of the rear member, a first bent portion which bends toward the outside of the vehicle and a second bent portion which is positioned at the rear side of the first bent portion and bends toward the inside of the vehicle are continuously formed.

According to the abovementioned aspect, a sufficient width of the luggage space is secured, and due to the closed sectional structure, the rear member having bent portions does not break at the bent portions in the event of a rear-end crash, whereby an applied shock load in the event of a rear-end crash can be effectively absorbed. In other words, since the open flange of the rear member does not exist near the side wall of the floor panel formed in a container shape in the luggage space area, the side wall of the rear member can be provided close to the side wall of the floor panel. Thereby, the angle of curvature at each bent portion of the rear member can be made smaller, whereby breakage of the rear member at the bent portions can be prevented in the event of a crash.

In the abovementioned aspect, the cross members connecting the rear members of the right and left rear side members can be formed so that both ends thereof increase in width, and both widened ends can be joined over the first bent portions and second bent portions of the rear members.

Thereby, even if a shock load is applied from the rear ends of the rear members in the event of the vehicle crash, by the tension at both widened ends of the cross members joined over the first and second bent portions, breakage between the bent portions is prevented, whereby excellent shock load absorption performance is maintained.

In addition, in the abovementioned aspect, bulkheads which have roughly U-shaped sections and are radially spread around the center of each bent portion can be disposed at the first and second bent portions of the rear member.

Due to provision of the bulkheads, the rigidity of the first and second bent portions is enhanced, whereby breakage at the bent portions can be more effectively prevented.

### BRIEF DESCRIPTION OF THE DRAWINGS

Fig. 1 is a plan view of the rear side members showing the first embodiment of the invention;
Fig. 2 is a perspective view of the rear side member viewed from the rear side;
Fig. 3 is a sectional view taken along line III - III of Fig. 1;
Fig. 4 is a sectional view taken along line IV - IV of Fig. 1;
Fig. 5 is a plan view of the related-art rear side members; and
Fig. 6 is a sectional view taken along line VI - VI of Fig. 5.

### DESCRIPTION OF THE PREFERRED EMBODIMENT

The embodiment of the invention will be described with reference to the drawings.

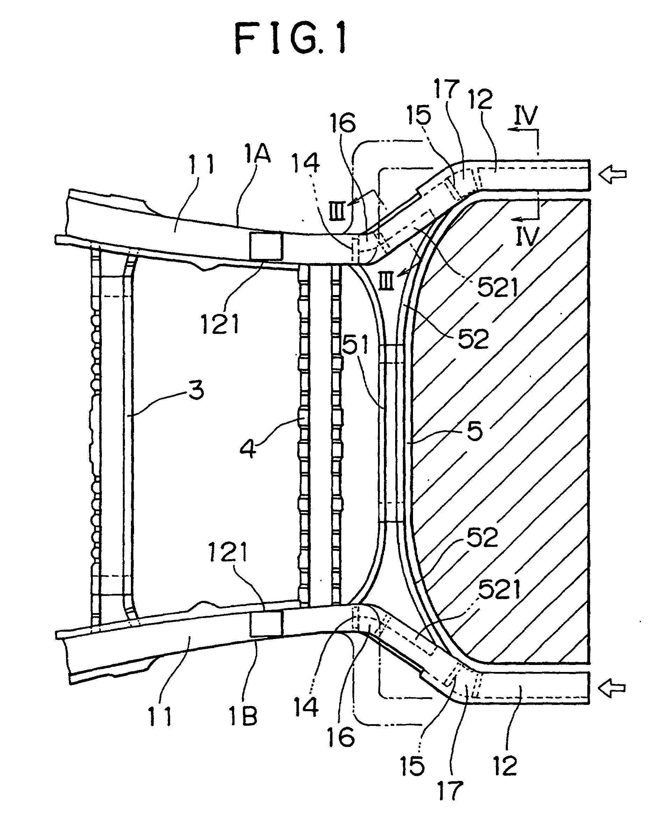

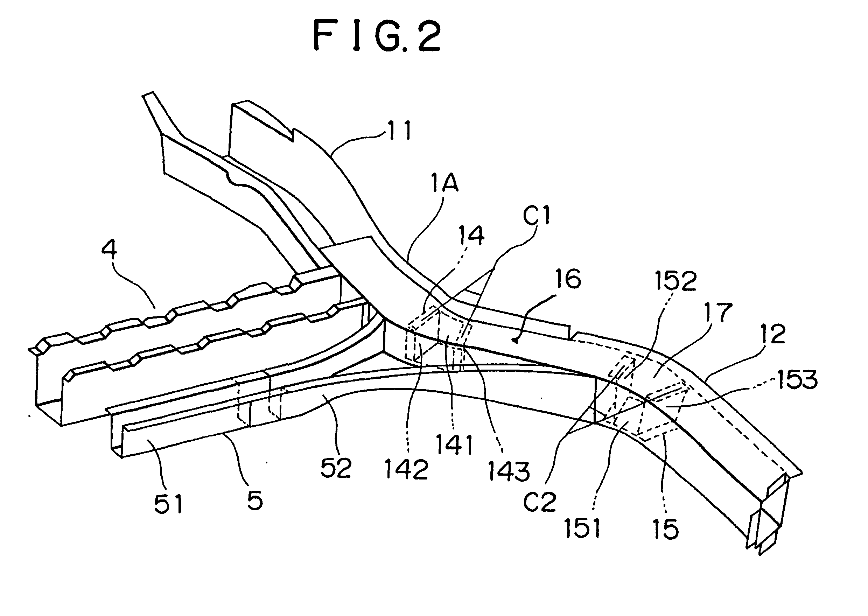

Fig. 1 is a plan view showing the vehicle's rear side members. Fig. 2 is a perspective view of one of the rear side members viewed from the rear side. In Fig. 1, right and left rear side members 1A and 1B extending back and forth at both sides of the vehicle body are comprised of front members 11 and rear members 12, and extended portions 121 having L-shaped sections extending from the front ends of the rear members 12 are joined to the rear end inner surfaces of the front members 11 which are formed so as to have hat-shaped sections opening upward.

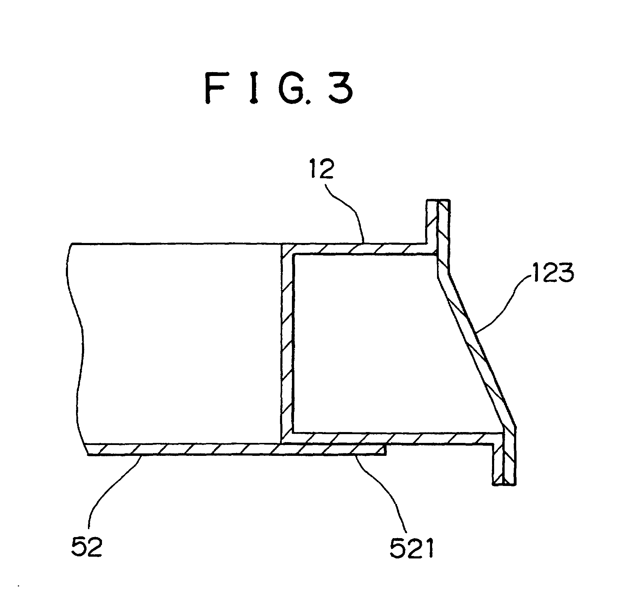

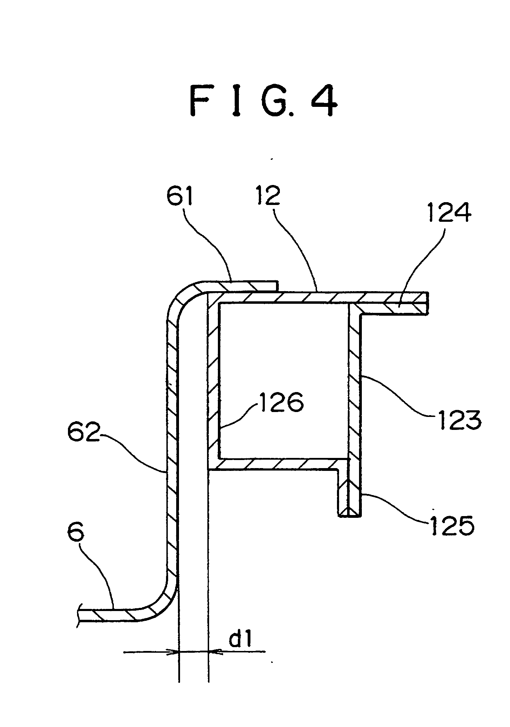

The rear members 12 have first bent portions 16 bending toward the outside of the vehicle and second bent portions 17 bending toward the inside of the vehicle at the middle portion so as to bend into a gentle S-shape as a whole, and the space between the right and left rear members 12 expands, and thereafter, the rear members extend substantially parallel to each other. The sectional structure of the rear members is formed into a closed section so that, as shown in Fig. 3 and Fig. 4, a flat plate 123 is joined to the flange portion so as to cover the opening of the rear member 12 formed to have an U-shaped section opening upward. And, in the luggage space area (the hatched area in Fig. 1), upper edge 61 of floor panel 6 (Fig. 4) which is formed into a container shape is joined onto the top surface of the rear member 12. The plate 123 inclines so as not to partially interfere with the rear wheel shock absorber (Fig. 3).

The right and left rear side members 1A and 1B are connected to each other at three points back and forth by the cross members 3, 4, and 5 extending in the direction of the vehicle's width. Among these, the cross member 5 is comprised of middle member 51 positioned at the middle portion in the direction of the vehicle width, and end members 52 positioned at both ends of the middle member 51. The members 51 and 52 is formed so as to have a hat-shaped section opening upward, the end members 52 are formed into generally triangle shapes which gradually widen toward the rear members 12 in the plan view, and the widened front ends are joined to the inner surfaces from the first bent portions 16 to the second bent portions 17 of the rear members 12. In addition, at the front end lower surfaces of the end members 52, flanges 521 (Fig. 1) are projectingly formed, which are joined to the lower surfaces of the rear members 12 (Fig. 3).

Inside the space of the closed section of the first bent portion 17 of the rear member 12, bulkheads 14 and 15 are inserted. The bulkheads 14 and 15 are formed of plate materials into U-shapes opened at the front ends in the plan view, and middle side walls 141 and 151 thereof are positioned at the center side of each bent portion of the rear member 12 (see Fig. 2). Right and left side walls 142 and 143 of the bulkhead 14 are joined to the top, bottom, and side surfaces of the rear member 12 at the flange portions formed at the front end, upper, and lower sides of the bulkheads. Furthermore, the right and left side walls 142 and 143 of the bulkhead 14 and the right and left side walls 152 and 153 of the bulkhead 15 radially extend from the centers C1 and C2 of each of the first bent portion and second bent portion.

In such a vehicle body structure, as shown by the arrow in Fig. 1, if a shock load is applied from the rear ends of the rear side members 1A and 1B in the event of a crash, the portion from the first bent portion 16 to the second bent portion 17 deforms from the gentle S-shape into a Z-shape as shown by the dashed line in Fig. 1, and in particular, breakage easily occurs at the bent portions 16 and 17. Herein, in the present embodiment, since the rear member 12 having the bent portions 16 and 17 is formed so as to have a U-shaped section opening sideways as described above (see Fig. 4), in comparison with the related-art case (see Fig. 6) where the upper edge 61' of the floor panel 6' is joined to the rear side members 7A and 7B having hat-shaped sections, breakage at the bent portions 16 and 17 of the rear member 12 are more effectively prevented. That is, since the open flanges 124 and 125 (Fig. 4) of the rear member 12 are positioned outside the vehicle, the side wall 62 of the floor panel 6 formed into a container shape and the side wall 126 of the rear member 12 can approach each other with a smaller gap d1 than the gap d2 in the related-art case. Thereby, the bending angles at the bent portions 16 and 17 of the rear member 12 can be made smaller, and this is advantageous to prevent breakage at the bent portions 16 and 17 of the rear member 12 in the event of a crash.

Furthermore, in the present embodiment, since a front end of the end member 52 of the cross member 5 which gradually widens is joined to the inside surface between the first bent portion 16 and the second bent portion 17, by the tension of the cross member, the portion between the bent portions 16 and 17 is prevented from deforming into Z-shapes, and as a result, breakage at the bent portions 16 and 17 is prevented.

In addition, in the present embodiment, the bulkheads 14 and 15 formed into U-shapes are provided inside the closed sections of the bent portions 16 and 17, respectively. The middle side walls 141 and 151 of the bulkheads 14 and 15 are disposed so as to be positioned at the center sides of the bent portions, and the right and left side walls 142, 143, 152, and 153 of the bulkheads 14 and 15 are formed so as to radially expand from the bending centers C1 and C2 and are joined to the top, bottom, and side surfaces of the rear member 12, whereby the rigidity at the bent portions 16 and 17 is further enhanced, and a result, breakage is more effectively prevented.

As described above, according to the vehicle body structure of the present invention, a sufficient width of luggage space can be secured, and in addition, breakage at bent portions due to application of a shock load in the event of a crash is prevented, whereby the shock load can be effectively absorbed.

## Claims

1. A vehicle body structure, wherein right and left rear side members (1A, 1B) extending back and forth on a vehicle comprises front members (11) having hat-shaped sections opening upward and rear members (12) formed so as to have generally U-shaped sections opening sideways, and the openings of which are closed by plates (123), at the middle portions of the rear members (12), first bent portion (16) bending toward the outside of the vehicle and second bent portion (17) bending toward the inside of the vehicle are successively formed.

2. A vehicle body structure according to Claim 1, wherein a cross member (5) connecting the rear members (12) of the right and left rear side members (1A, 1B) is formed so as to widen at both ends, and both widened ends (52) are joined to the portions from the first bent portions (16) to the second bent portions (17) of the rear members (12).

3. A vehicle body structure as set forth in Claim 1 or 2, wherein at the first bent portions (16) and the second bent portions (17) of the rear members (12), bulkheads (14, 15), which have generally U-shaped sections and radially expand around the centers (C1, C2) of the bent portions, are disposed.

## Patentansprüche

1. Kraftfahrzeugaufbau, bei dem die rechten und linken Heckseitenteile (1A, 1B), die sich längs eines Fahrzeugs erstrecken, jeweils einen vorderen Abschnitt (11) mit einem hutförmigen; sich nach oben öffnenden Querschnitt und einen hinteren Abschnitt (12) mit einem allgemein U-förmigeh, seitlich offenen Querschnitt umfassen, wobei jeweils die offenen Seiten durch Platten (123) abgedeckt sind, und wobei im Mittelbereich der Heckseitenteile ein erster gekrümmter Bereich (16), der sich in Richtung Außenseite des Fahrzeugs krümmt, und ein zweiter gekrümmter Bereich (17), der sich in Richtung Innenseite des Fahrzeugs krümmt, ausgebildet ist.

2. Kraftfahrzeugaufbau nach Anspruch 1, bei dem
ein Querträger (5), der die hinteren Abschnitte (12) der rechten und linken Heckseitenteile (1A, 1B) miteinander verbindet, so ausgebildet ist, dass er sich an beiden Enden aufweitet, wobei beide aufgeweiteten Enden (52) jeweils mit dem Bereich verbunden sind, der vom ersten gekrümmten Bereich (16) zum zweiten gekrümmten Bereich (17) der hinteren Abschnitte (12) reicht.

3. Kraftfahrzeugaufbau nach Anspruch 1 oder 2, bei dem
jeweils am ersten gekrümmten Bereich (16) und am zweiten gekrümmten Bereich (17) der hinteren Abschnitte (12) Wandstrukturen (14,15) vorgesehen sind, die allgemein U-förmige Querschnitte haben und sich radial um die Mittelpunkte (C1, C2) der gekrümmten Bereiche erstrecken.

## Revendications

1. Structure de carrosserie de véhicule automobile, dans laquelle les éléments latéraux arrière droite et gauche (1A, 1B) s'étendant à l'arrière et à l'avant sur un véhicule comprennent des éléments avant (11) possédant des éléments arrière et s'ouvrant vers le haut en profilés en oméga (12) formés de telle sorte de présenter des coupes en forme globale de U s'ouvrant sur les côtés, et les ouvertures desquels sont fermées par des plaques (123), sur les parties médianes des éléments arrière (12), la première partie pliée (16) se pliant vers l'extérieur du véhicule et la deuxième partie pliée (17) se pliant vers l'intérieur du véhicule sont formées l'une à la suite de l'autre.

2. Structure de carrosserie de véhicule automobile selon la revendication 1, dans laquelle un élément transversal (5) connectant les éléments arrière (12) des éléments latéraux arrière droite et gauche (1A, 1B) est formé de telle sorte de s'élargir aux deux extrémités, et les deux extrémités élargies (52) sont jointes aux parties depuis les premières parties pliées (16) aux deuxièmes parties pliées (17) des éléments arrière (12).

3. Structure de carrosserie de véhicule automobile selon la revendication 1 ou 2, dans laquelle sur les premières parties pliées (16) et les deuxièmes parties pliées (17) des éléments arrière (12), des tabliers (14, 15), qui ont une coupe en forme globale de U et s'étendent radialement autour des centres (C1, C2) des parties pliées, sont agencés.
